# EUROPEAN PATENT APPLICATION

(11) **EP 4 607 936 A1**
(43) Date of publication of application: **27.08.2025**
(21) Application number: 23896326.8
(22) Date of filing: 23.10.2023
(51) Int. Cl.: H04N 23/63

(54) **METHOD AND APPARATUS FOR STABILIZING IMAGE FRAMES**

(30) Priority: 02.12.2022 CN 202211541688
(71) Applicant: Honor Device Co., Ltd., Shenzhen, Guangdong 518040 (CN)
(72) Inventor: CAI, Lifeng, Shenzhen, Guangdong 518040 (CN); WANG, Li, Shenzhen, Guangdong 518040 (CN); CHEN, Jie, Shenzhen, Guangdong 518040 (CN); ZHANG, Pengpeng, Shenzhen, Guangdong 518040 (CN); DU, Hongyan, Shenzhen, Guangdong 518040 (CN)
(74) Representative: MERH-IP Matias Erny Reichl Hoffmann Patentanwälte PartG mbB
(86) International application number: PCT/CN2023/125984
(87) International publication number: WO 2024/114171

(57) **Abstract**

Embodiments of this application provide an image frame stabilization method and apparatus. The method includes: receiving a first operation of a user; starting a camera application in response to the first operation, and successively performing drawing and rendering to obtain a first image frame, a second image frame, and a third image frame; compositing the first image frame to obtain a first composited image frame, compositing the second image frame to obtain a second composited image frame, and compositing the third image frame to obtain a third composited image frame, respectively based on a first frame rate; and a terminal device displays the first composited image frame in a first period, displays the second composited image frame in a second period, and displays the third composited image frame in a third period, where a time interval between the first period and the second period is the same as a time interval between the second period and the third period. This may reduce, in a layer composition phase, picture freezing caused by non-uniform image frames before the layer composition, so that a displayed picture can be in a uniform state in a period.

## Description

This application claims priority to Chinese Patent Application No. 202211541688.5, filed with the China National Intellectual Property Administration on December 2, 2022 and entitled "IMAGE FRAME STABILIZATION METHOD AND APPARATUS", which is incorporated herein by reference in its entirety.

### TECHNICAL FIELD

This application relates to the field of terminal technologies, and in particular, to an image frame stabilization method and apparatus.

### BACKGROUND

With popularization and development of the Internet, many terminal devices may support photographing and video recording functions, and support display of a preview picture during photographing and video recording, so that a user can determine, based on a picture displayed in a preview interface, whether to perform photographing or video recording.

Generally, when the terminal device receives an operation of opening a camera preview picture by the user, the terminal device may collect an image sequence based on a camera lens, and obtain a preview picture through image processing and displaying of each image frame in the image sequence. However, due to a difference between image frames, frame output times of the image frames obtained after image processing are not uniform, and consequently, the camera preview picture is frozen.

### SUMMARY

Embodiments of this application provide an image frame stabilization method and apparatus, so that a terminal device can ensure fluency of a preview picture when performing layer composition on an image frame.

According to a first aspect, an embodiment of this application provides an image frame stabilization method. The method is applied to a terminal device, and the method includes: receiving a first operation of a user; receiving a first operation of a user; starting a camera application in response to the first operation, and successively performing drawing and rendering to obtain a first image frame, a second image frame, and a third image frame, where a time interval between the second image frame and the first image frame is a first time interval, a time interval between the third image frame and the second image frame is a second time interval, and the first time interval is different from the second time interval; compositing the first image frame to obtain a first composited image frame, compositing the second image frame to obtain a second composited image frame, and compositing the third image frame to obtain a third composited image frame, respectively based on a first frame rate; and displaying the first composited image frame in a first period, displaying the second composited image frame in a second period, and displaying the third composited image frame in a third period, where a time interval between the first period and the second period is a third time interval, a time interval between the second period and the third period is a fourth time interval, and the third time interval is the same as the fourth time interval. This may reduce, in a layer composition phase, picture freezing caused by non-uniform image frames before the layer composition, so that a displayed picture can be in a uniform state in a period.

In a possible implementation, the compositing the first image frame to obtain a first composited image frame, compositing the second image frame to obtain a second composited image frame, and compositing the third image frame to obtain a third composited image frame, respectively based on a first frame rate includes: compositing the first image frame in a fourth period to obtain the first composited image frame when it is determined, in the fourth period, that a first moment is greater than or equal to a target time interval determined based on the first frame rate; compositing the second image frame in a fifth period to obtain the second composited image frame when it is determined, in the fifth period, that a fifth time interval between a second moment and a time at which the first image frame is composited is greater than or equal to the target time interval, where the fifth period is later than the fourth period; and compositing the third image frame in a sixth period to obtain the third composited image frame when it is determined, in the sixth period, that a sixth time interval between a third moment and a time at which the second image frame is composited is greater than or equal to the target time interval, where the sixth period is later than the fifth period. This ensures that the terminal device may ensure uniform display of adjacent image frames in an image composition processing phase based on the first frame rate and an interval between times at which adjacent frames are composited.

In a possible implementation, the method further includes: not compositing the second image frame in the fifth period when it is determined, in the fifth period, that the fifth time interval is less than the target time interval. The compositing the second image frame in a fifth period to obtain the second composited image frame when it is determined, in the fifth period, that a fifth time interval between a second moment and a time at which the first image frame is composited is greater than or equal to the target time interval includes: compositing the second image frame in a seventh period to obtain the second composited image frame when it is determined, in the seventh period, that a seventh time interval between a fourth moment and the time at which the first image frame is composited is greater than or equal to the target time interval, where the seventh period is later than the fifth period, and the seventh period is earlier than the sixth period. This ensures that when determining that non-uniform display of an image may be caused by performing layer composition on the image frame in a specific period, the terminal device does not perform composition processing on the image frame in the period, so as to ensure stability of subsequent image display.

In a possible implementation, the first image frame, the second image frame, and the third image frame are all image frames of a preview layer. This may ensure that image frames of a same layer may be processed based on a same frame rate.

In a possible implementation, the terminal device includes a camera module and a camera hardware abstraction layer service. Before the successively performing drawing and rendering to obtain a first image frame, a second image frame, and a third image frame, the method further includes: The camera module generates a first image sequence based on the first frame rate, and sends the first image sequence to the camera hardware abstraction layer service, where the first image sequence includes a first original image frame, a second original image frame, and a third original image frame, a time interval between the first original image frame and the second original image frame is an eighth time interval, a time interval between the second original image frame and the third original image frame is a ninth time interval, and the eighth time interval is the same as the ninth time interval; and the camera hardware abstraction layer service performs image processing on the first original image frame to obtain a first process image frame, performs image processing on the second original image frame to obtain a second process image frame, and performs image processing on the third original image frame to obtain a third process image frame. In this way, even if frame output times of a camera provider are not uniform, the surface flinger may still ensure a sufficient layer composition time when layer composition is performed on a buffer, and perform layer composition at a stable consumption rate, so as to reduce picture freezing.

In a possible implementation, the terminal device includes a camera service and a layer view. The method further includes: When the camera service receives the first process image frame, the second process image frame, and the third process image frame that are sent by the camera hardware abstraction layer service, the camera service separately sets a first identifier for the first process image frame, the second process image frame, and the third process image frame, where the first identifier indicates the first frame rate; and the camera service sends the first process image frame with the first identifier, the second process image frame with the first identifier, and the third process image frame with the first identifier to the layer view. The successively performing drawing and rendering to obtain a first image frame, a second image frame, and a third image frame includes: The layer view successively draws and renders the first process image frame to obtain the first image frame, draws and renders the second process image frame to obtain the second image frame, and draws and renders the third process image frame to obtain the third image frame.

In a possible implementation, the terminal device includes a surface flinger. The compositing the first image frame to obtain a first composited image frame, compositing the second image frame to obtain a second composited image frame, and compositing the third image frame to obtain a third composited image frame, respectively based on a first frame rate includes: The surface flinger composites the first image frame to obtain the first composited image frame, composites the second image frame to obtain the second composited image frame, and composites the third image frame to obtain the third composited image frame, respectively based on the first frame rate indicated in the first identifier, in a case in which the surface flinger receives the first identifier sent by the layer view. This ensures that the surface flinger may determine a frame rate for composition based on the identifier, so as to implement uniform layer composition.

In a possible implementation, the first identifier is obtained based on a SetConsumeRate interface, and the SetConsumeRate interface is configured to indicate the layer view to transfer the first identifier to the surface flinger.

In a possible implementation, the first frame rate is less than 60 Hz, so that the terminal device can keep a relatively stable picture at a frame rate less than 60 Hz.

According to a second aspect, an embodiment of this application provides an image frame stabilization method. The method is applied to a terminal device, and the terminal device includes a layer view and a surface flinger. The method includes: A first operation of a user is received; a camera application is started in response to the first operation, and the layer view successively performs drawing and rendering to obtain a first image frame, a second image frame, and a third image frame, where a time interval between the second image frame and the first image frame is a first time interval, a time interval between the third image frame and the second image frame is a second time interval, and the first time interval is different from the second time interval; the layer view sends the first image frame to the surface flinger in an eighth period based on a first frame rate, sends the second image frame to the surface flinger in a ninth period based on the first frame rate, and sends the third image frame to the surface flinger in a tenth period based on the first frame rate, where a time interval between the eighth period and the ninth period is a tenth time interval, a time interval between the ninth period and the tenth period is an eleventh time interval, and the tenth time interval is the same as the eleventh time interval; and the surface flinger composites the first image frame to obtain the first composited image frame, composites the second image frame to obtain the second composited image frame, and composites the third image frame to obtain the third composited image frame. This ensures that the layer view may stably send the image frame to the surface flinger based on the first frame rate, thereby ensuring composition of the surface flinger and stability of subsequent picture display on a screen.

In a possible implementation, the sending the first image frame to the surface flinger in an eighth period based on a first frame rate, sending the second image frame to the surface flinger in a ninth period based on the first frame rate, and sending the third image frame to the surface flinger in a tenth period based on the first frame rate includes: sending the first image frame to the surface flinger in the eighth period when it is determined, in the eighth period, that a fifth moment is greater than or equal to a target time interval determined based on the first frame rate; sending the second image frame to the surface flinger in the ninth period when it is determined, in the ninth period, that a twelfth time interval between a sixth moment and a time at which the first image frame is sent to the surface flinger is greater than or equal to the target time interval; and sending the third image frame to the surface flinger in the tenth period when it is determined, in the tenth period, that a thirteenth time interval between a seventh moment and a time at which the second image frame is sent to the surface flinger is greater than or equal to the target time interval. This ensures that the layer view may send buffers to a surface flinger uniformly based on the first frame rate and an interval between times at which two adjacent buffers are separately sent to a BBQ, thereby alleviating picture freezing caused when the screen displays consecutive frames.

In a possible implementation, the method further includes: not sending the second image frame to the surface flinger in the ninth period when the twelfth time interval is less than the target time interval in the ninth period. The sending the second image frame to the surface flinger in the ninth period when it is determined, in the ninth period, that a twelfth time interval between a sixth moment and a time at which the first image frame is sent to the surface flinger is greater than or equal to the target time interval includes: sending the second image frame to the surface flinger in an eleventh period when it is determined, in the eleventh period, that a fourteenth time interval between an eighth moment and the time at which the first image frame is sent to the surface flinger is greater than or equal to the target time interval, where the eleventh period is later than the ninth period, and the eleventh period is earlier than the tenth period. This ensures that when determining that non-uniform display of an image may be caused by sending the image frame in a specific period, the layer view does not perform composition processing on the image frame in the period, so as to ensure stability of subsequent image display.

In a possible implementation, the first image frame, the second image frame, and the third image frame are all image frames of a preview layer. This may ensure that image frames of a same layer may be processed based on a same frame rate.

In a possible implementation, the first frame rate is less than 60 Hz, so that the terminal device can keep a relatively stable picture at a frame rate less than 60 Hz.

According to a third aspect, an embodiment of this application provides an image frame stabilization apparatus. The method is applied to a terminal device. The apparatus includes: a processing unit, configured to receive a first operation of a user, where the processing unit is further configured to start a camera application in response to the first operation, and successively perform drawing and rendering to obtain a first image frame, a second image frame, and a third image frame, where a time interval between the second image frame and the first image frame is a first time interval, a time interval between the third image frame and the second image frame is a second time interval, and the first time interval is different from the second time interval; and the processing unit is further configured to composite the first image frame to obtain a first composited image frame, composite the second image frame to obtain a second composited image frame, and composite the third image frame to obtain a third composited image frame, respectively based on a first frame rate; and a display unit, configured to display the first composited image frame in a first period, display the second composited image frame in a second period, and display a third composited image frame in a third period, where a time interval between the first period and the second period is a third time interval, a time interval between the second period and the third period is a fourth time interval, and the third time interval is the same as the fourth time interval.

In a possible implementation, the processing unit is further configured to: composite the first image frame in a fourth period to obtain the first composited image frame when it is determined, in the fourth period, that a first moment is greater than or equal to a target time interval determined based on the first frame rate; composite the second image frame in a fifth period to obtain the second composited image frame when it is determined, in the fifth period, that a fifth time interval between a second moment and a time at which the first image frame is composited is greater than or equal to the target time interval; and composite the third image frame in a sixth period to obtain the third composited image frame when it is determined, in the sixth period, that a sixth time interval between a third moment and a time at which the second image frame is composited is greater than or equal to the target time interval, where the sixth period is later than the fifth period.

In a possible implementation, the processing unit is further configured to: not composite the second image frame in the fifth period when it is determined, in the fifth period, that the fifth time interval is less than the target time interval. The compositing the second image frame in a fifth period to obtain the second composited image frame when it is determined, in the fifth period, that a fifth time interval between a second moment and a time at which the first image frame is composited is greater than or equal to the target time interval includes: compositing the second image frame in a seventh period to obtain the second composited image frame when it is determined, in the seventh period, that a seventh time interval between a fourth moment and the time at which the first image frame is composited is greater than or equal to the target time interval, where the seventh period is later than the fifth period, and the seventh period is earlier than the sixth period.

In a possible implementation, the first image frame, the second image frame, and the third image frame are all image frames of a preview layer.

In a possible implementation, the terminal device includes a camera module and a camera hardware abstraction layer service. Before the successively performing drawing and rendering to obtain a first image frame, a second image frame, and a third image frame, the processing unit is further configured to: generate a first image sequence based on the first frame rate, and send the first image sequence to the camera hardware abstraction layer service, where the first image sequence includes a first original image frame, a second original image frame, and a third original image frame, a time interval between the first original image frame and the second original image frame is an eighth time interval, a time interval between the second original image frame and the third original image frame is a ninth time interval, and the eighth time interval is the same as the ninth time interval; and perform image processing on the first original image frame to obtain a first process image frame, perform image processing on the second original image frame to obtain a second process image frame, and perform image processing on the third original image frame to obtain a third process image frame.

In a possible implementation, the terminal device includes a camera service and a layer view. The processing unit is further configured to: when receiving the first process image frame, the second process image frame, and the third process image frame that are sent by the camera hardware abstraction layer service, separately set a first identifier for the first process image frame, the second process image frame, and the third process image frame, where the first identifier indicates the first frame rate; the camera service sends the first process image frame with the first identifier, the second process image frame with the first identifier, and the third process image frame with the first identifier to the layer view; and the layer view successively draws and renders the first process image frame to obtain the first image frame, draws and renders the second process image frame to obtain the second image frame, and draws and renders the third process image frame to obtain the third image frame.

In a possible implementation, the terminal device includes a surface flinger. The processing unit is further configured to: composite the first image frame to obtain the first composited image frame, composite the second image frame to obtain the second composited image frame, and composite the third image frame to obtain the third composited image frame, respectively based on the first frame rate indicated in the first identifier, in a case in which the first identifier sent by the layer view is received.

In a possible implementation, the first identifier is obtained based on a SetConsumeRate interface, and the SetConsumeRate interface is configured to indicate the layer view to transfer the first identifier to the surface flinger.

In a possible implementation, the first frame rate is less than 60 Hz, so that the terminal device can keep a relatively stable picture at a frame rate less than 60 Hz.

According to a fourth aspect, an embodiment of this application provides an image frame stabilization apparatus. The method is applied to a terminal device, and the terminal device includes a layer view and a surface flinger. The method includes: a processing unit, configured to receive a first operation of a user, and start a camera application in response to the first operation, where the processing unit is further configured to: successively perform drawing and rendering to obtain a first image frame, a second image frame, and a third image frame, where a time interval between the second image frame and the first image frame is a first time interval, a time interval between the third image frame and the second image frame is a second time interval, and the first time interval is different from the second time interval; the processing unit is further configured to send the first image frame to the surface flinger in an eighth period based on a first frame rate, send the second image frame to the surface flinger in a ninth period based on the first frame rate, and send the third image frame to the surface flinger in a tenth period based on the first frame rate, where a time interval between the eighth period and the ninth period is a tenth time interval, a time interval between the ninth period and the tenth period is an eleventh time interval, and the tenth time interval is the same as the eleventh time interval; and the processing unit is further configured to: composite the first image frame to obtain the first composited image frame, composite the second image frame to obtain the second composited image frame, and composite the third image frame to obtain the third composited image frame.

In a possible implementation, the processing unit is further configured to: send the first image frame to the surface flinger in the eighth period when it is determined, in the eighth period, that a fifth moment is greater than or equal to a target time interval determined based on the first frame rate; send the second image frame to the surface flinger in the ninth period when it is determined, in the ninth period, that a twelfth time interval between a sixth moment and a time at which the first image frame is sent to the surface flinger is greater than or equal to the target time interval; and send the third image frame to the surface flinger in the tenth period when it is determined, in the tenth period, that a thirteenth time interval between a seventh moment and a time at which the second image frame is sent to the surface flinger is greater than or equal to the target time interval.

In a possible implementation, the processing unit is further configured to: not send the second image frame to the surface flinger in the ninth period when the twelfth time interval is less than the target time interval in the ninth period. The sending the second image frame to the surface flinger in the ninth period when it is determined, in the ninth period, that a twelfth time interval between a sixth moment and a time at which the first image frame is sent to the surface flinger is greater than or equal to the target time interval includes: sending the second image frame to the surface flinger in an eleventh period when it is determined, in the eleventh period, that a fourteenth time interval between an eighth moment and the time at which the first image frame is sent to the surface flinger is greater than or equal to the target time interval, where the eleventh period is later than the ninth period, and the eleventh period is earlier than the tenth period.

In a possible implementation, the first image frame, the second image frame, and the third image frame are all image frames of a preview layer.

In a possible implementation, the first frame rate is less than 60 Hz.

According to a fifth aspect, an embodiment of this application provides a terminal device, including a processor and a memory. The memory is configured to store code instructions, and the processor is configured to run the code instructions, so that the terminal device is enabled to perform the method according to any one of the first aspect or the implementations of the first aspect, or perform the method according to any one of the second aspect or the implementations of the second aspect.

According to a sixth aspect, an embodiment of this application provides a computer-readable storage medium, where the computer-readable storage medium stores instructions, and when the instructions are executed, a computer is enabled to perform the method according to any one of the first aspect or the implementations of the first aspect, or perform the method according to any one of the second aspect or the implementations of the second aspect.

According to a seventh aspect, a computer program product is provided, including a computer program, where when the computer program is run, a computer is enabled to perform the method according to any one of the first aspect or the implementations of the first aspect, or perform the method according to any one of the second aspect or the implementations of the second aspect.

According to an eighth aspect, a chip is provided, where the chip includes a processor, and the processor is configured to invoke a computer program in a memory, so that a computer is enabled to perform the method according to any one of the first aspect or the implementations of the first aspect, or perform the method according to any one of the second aspect or the implementations of the second aspect.

It should be understood that the technical solutions of the second aspect to the seventh aspect of this application correspond to those of the first aspect of this application, and the beneficial effects achieved in these aspects and corresponding feasible implementations are similar. Details are not described again.

### BRIEF DESCRIPTION OF DRAWINGS

FIG. 1A and FIG. 1B are schematic diagrams of a scenario according to an embodiment of this application;
FIG. 2 is a schematic diagram of a software architecture of a terminal device according to an embodiment of this application;
FIG. 3 is a schematic diagram of a software architecture of another terminal device according to an embodiment of this application;
FIG. 4 is a schematic diagram of a consumption buffer according to an embodiment of this application;
FIG. 5 is a schematic diagram of a frame return time according to an embodiment of this application;
FIG. 6 is a schematic diagram of another consumption buffer according to an embodiment of this application;
FIG. 7 is a schematic diagram of still another consumption buffer according to an embodiment of this application;
FIG. 8 is a schematic diagram of a hardware structure of a terminal device according to an embodiment of this application;
FIG. 9 shows an image frame stabilization method according to an embodiment of this application;
FIG. 10 is a schematic diagram of still another consumption buffer according to an embodiment of this application;
FIG. 11 shows another image frame stabilization method according to an embodiment of this application;
FIG. 12 is a schematic diagram of still another consumption buffer according to an embodiment of this application;
FIG. 13 is a schematic diagram of a structure of an image frame stabilization apparatus according to an embodiment of this application; and
FIG. 14 is a schematic diagram of a hardware structure of another terminal device according to an embodiment of this application.

### DESCRIPTION OF EMBODIMENTS

To clearly describe the technical solutions in the embodiments of this application, in the embodiments of this application, words such as "first" and "second" are used to distinguish between same items or similar items with basically the same functions and effects. For example, a first value and a second value are merely used to distinguish between different values, but not used to limit a sequence thereof. A person skilled in the art may understand that the words such as "first" and "second" do not limit a quantity or an execution sequence, and the words such as "first" and "second" do not define a definite difference.

It should be noted that in this application, the words such as "example" or "for example" are used to represent giving an example, an illustration, or a description. Any embodiment or design solution described as "example" or "for example" in this application should not be construed as being preferred or advantageous over other embodiments or design solutions. Exactly, use of the words such as "example" or "for example" is intended to present related concepts in a specific manner.

In this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually represents an "or" relationship between associated objects. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

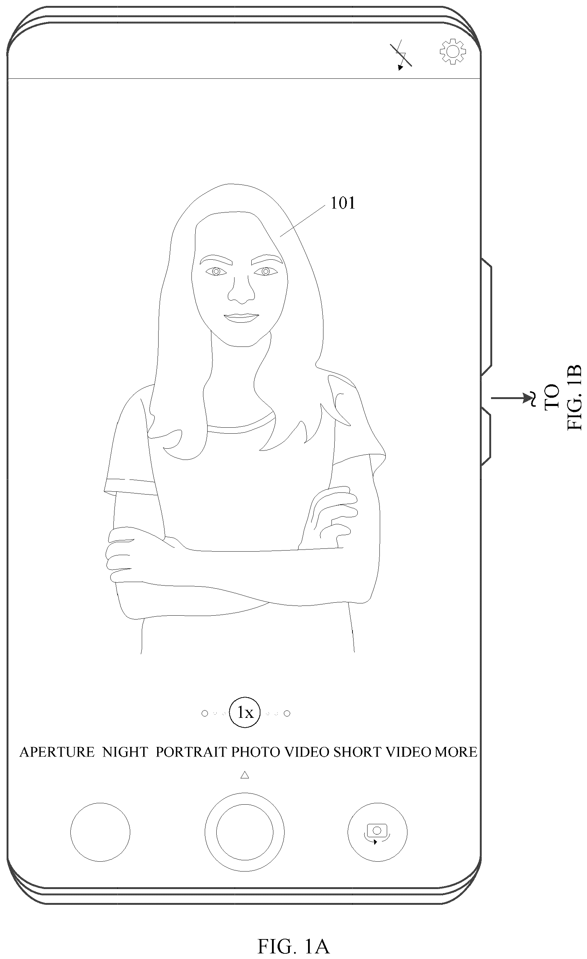

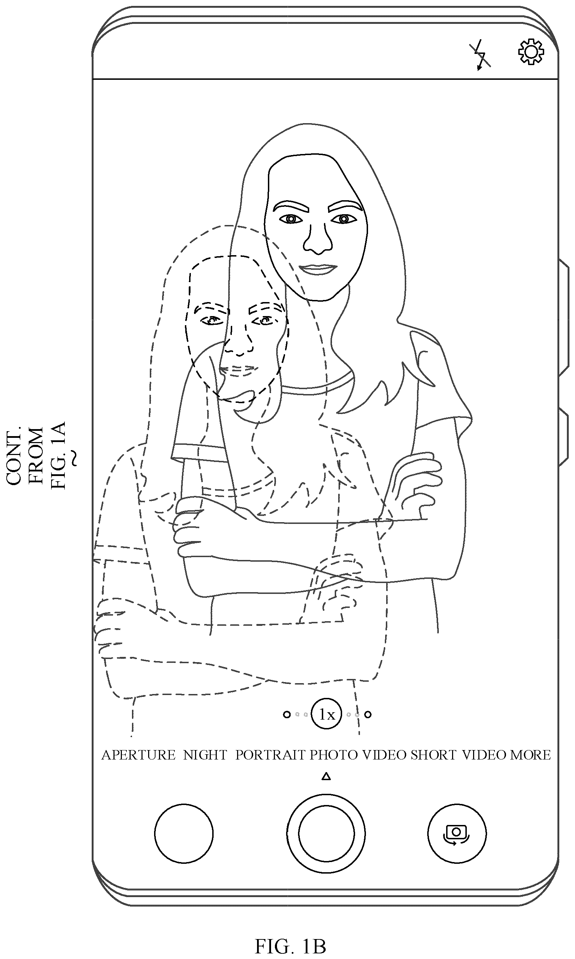

FIG. 1A and FIG. 1B are schematic diagrams of a scenario according to an embodiment of this application. In the embodiment corresponding to FIG. 1A and FIG. 1B, an example in which a terminal device is a mobile phone is used for description. This example does not constitute a limitation on this embodiment of this application.

When the terminal device receives an operation of starting a camera application by a user, the terminal device may collect an image sequence based on a camera lens, and perform image processing and displaying of each image frame in the image sequence, so that the terminal device can display an interface shown in FIG. 1A. The interface may be a preview picture corresponding to a photographing function. The preview picture may include a target 101, and the target 101 may be in a middle position of the preview picture. The interface shown in FIG. 1A may further include a control for enabling photographing, a control for opening an album, a control for switching a camera lens, another function control corresponding to the camera application, and the like.

However, due to a difference between image frames, for example, inconsistency of display content and/or light and shadow effects of the image frames, frame output times of the image frames obtained after image processing are not uniform, and consequently, the camera preview picture is frozen. For example, when the target 101 moves in the lower left direction, the position of the target 101 in the preview picture should also move in the lower left direction. However, because the frame output times of the image frames are not uniform, the target 101 in an interface shown in FIG. 1B should have been in a dashed line position. However, due to picture freezing, the target 101 is still in the middle position of the preview picture, and content displayed in the preview picture is inconsistent with an actual situation of the target, leading to poor user experience.

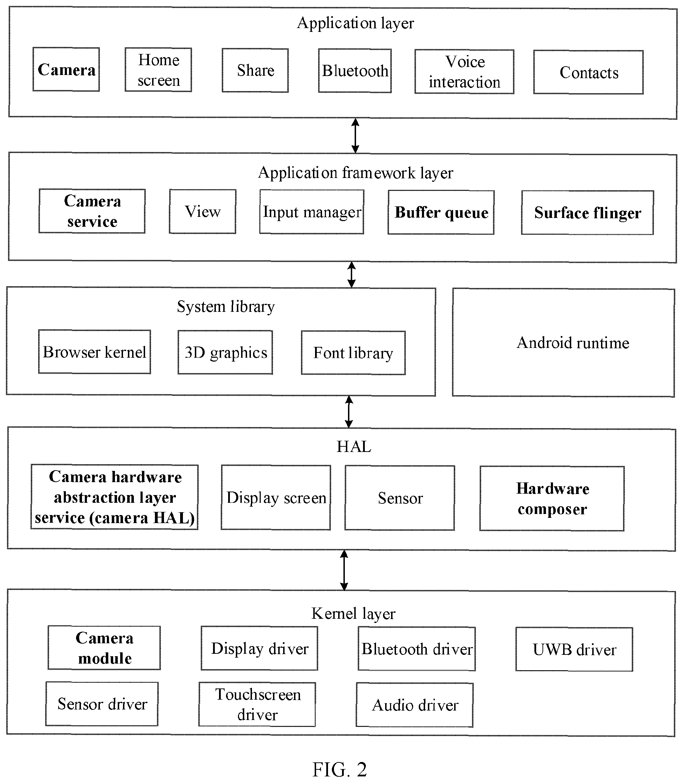

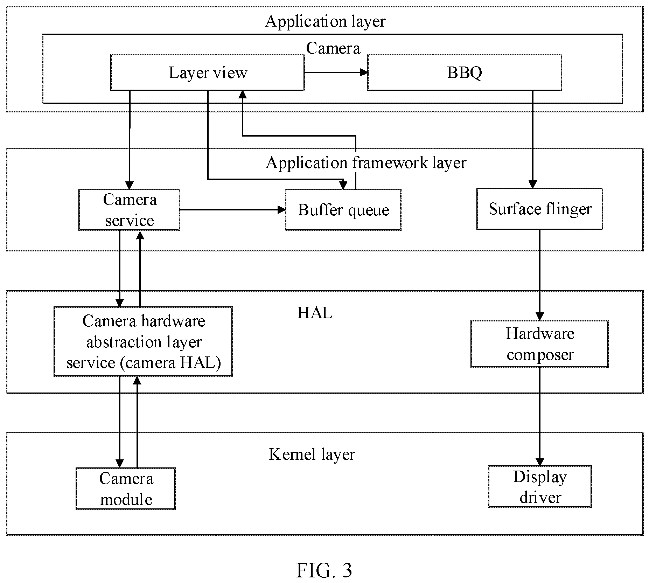

Specifically, for a process in which the terminal device displays the preview picture, refer to the description in the embodiment corresponding to FIG. 3. FIG. 2 is a schematic diagram of a software architecture of a terminal device according to an embodiment of this application.

As shown in FIG. 2, a layered architecture of the terminal device divides software into several layers, and each layer has a clear role and task. The layers communicate with each other by using software interfaces. In some embodiments, the Android system is divided into a plurality of layers from top to bottom: an application (application, APP) layer, an application framework (framework) layer, a system library, a hardware abstraction layer (hardware abstraction layer, HAL), and a kernel (kernel) layer.

The application layer provides an application required by the terminal device. The application layer may include a camera, a home screen, sharing, Bluetooth, a voice interaction application, contacts, and the like. The camera may be a program that comes with a system of the terminal device, or may be an application provided by a third party.

The application framework layer provides an application programming interface (application programming interface, API) and a programming framework for the applications at the application layer. The application framework layer includes some predefined functions.

The application framework layer may further include a camera service (camera service), a surface flinger (surface flinger, SF), a view, an input manager, a buffer queue (bufferqueue), and the like. The view includes a visual control, for example, a control for displaying a text and a control for displaying a picture. The view may be used to build an application. The display interface may include one or more views. For example, a display interface including an SMS message notification icon may include a view for displaying a text and a view for displaying a picture.

The camera service may also be referred to as a camera framework. The camera service is used to create a bufferqueue. The surface flinger is used to provide a layer composition service, and is responsible for separately performing processing such as layer rendering, layer classification, and layer composition on each layer.

The system library may include a browser kernel, 3D graphics, a font library, and the like. The terminal device may further include Android runtime.

The HAL is used to abstract hardware, and may provide an interface for querying a hardware device for an upper-layer application, or may provide a data storage service for an upper-layer application.

The HAL may include a camera hardware abstraction layer service (camera HAL), a display screen, a sensor, and a hardware composer (hardware composer, HWC).

The camera HAL may also be referred to as a camera provider. The camera HAL is used to perform image processing on an input original image frame, such as image cropping, image special effect processing, anti-shake processing, and image recognition, and input a processed image frame into the camera service. The HWC is used to superpose layer data prepared by the surface flinger, and forward the superposed layer data to a display driver.

The kernel layer may include a camera module (camera sensor), a display driver, a Bluetooth driver, an ultra wide band (ultra wide band, UWB) driver, a sensor driver, a touchscreen driver, an audio driver, and the like.

The camera sensor is configured to obtain an original image frame image according to an instruction. An original image sequence may include a plurality of original image frames, and a format of any original image frame in the plurality of original image frames may be an unprocessed (RAW) format. The display driver is configured to display the image frame input by the HWC.

It may be understood that the software architecture of the terminal device may further include other content. This is not limited in this embodiment of this application.

Based on the embodiment corresponding to FIG. 2, a process in which the terminal device displays the preview picture may include: a camera, a bufferqueue, a camera service, a camera HAL, a surface flinger, an HWC, a display driver, a camera sensor, and the like.

For example, FIG. 3 is a schematic diagram of a software architecture of another terminal device according to an embodiment of this application.

The camera may include a layer view (surface view), and the surface view may be used to create a BLASTbufferqueue (or BBQ for short). The camera (which may alternatively be understood as a surface view in the camera) may be configured to draw and render a received image frame.

When the terminal device receives an operation of the user, such as enabling the camera application, the surface view in the camera application may create a bufferqueue and a BBQ, and the surface view may alternatively indicate the camera service to collect an image frame.

During the creation of the bufferqueue, the bufferqueue may establish a connection between a consumer surface view and a producer camera service. The consumer registers with the bufferqueue for monitoring of onFrameAvailable. After the producer invokes a queueBuffer function to transmit a buffer to the bufferqueue, the consumer receives a callback message (or a callback function).

During the creation of the BBQ, the BBQ may establish a connection between a producer surface view and a consumer surface flinger, and the BBQ may alternatively serve as a consumer of the bufferqueue.

In a process in which the surface view indicates the camera service to collect the image frame, the surface view may send, to the camera service, an instruction for collecting the image frame (which may alternatively be an instruction for the user to create a preview stream). The camera service generates a group of register configurations (or referred to as image output parameters) for the camera sensor to configure image output modes, image sizes, image output frame rate parameters, and the like of the camera sensor. The camera service sends the instruction for collecting the image frame and the image output parameters to the camera HAL together. The camera HAL sends, to the camera sensor, the instruction for collecting the image frame and the image output parameters. Adaptively, when receiving the instruction for collecting the image frame and the image output parameters, the camera sensor may collect the original image sequence based on the image output parameters, and send the original image sequence to the camera HAL. The camera HAL performs image processing on each original image frame in the original image sequence, and returns the processed image frame to the camera service.

Further, the camera service buffers, in the bufferqueue, the image frame (which may also be referred to as a buffer) that is subjected to image processing and that is returned by the camera HAL. The bufferqueue sends the buffer to the surface view and notifies the surface view to consume the buffer. The surface view invokes an acquireBuffer function to consume the buffer, and invokes a queueBuffer function to send the buffer to the BBQ. The BBQ sends the buffer to the surface flinger by using a transaction object. The surface flinger may perform layer composition on the received buffer based on a consumption rate received by the surface flinger. For example, the surface flinger may perform layer composition on the buffer when receiving a vertical synchronization (vertical synchronization, Vsync) event.

A Vsync signal is a periodic signal, and a Vsync signal period may be set based on a screen refresh rate. For example, when the screen refresh rate is 60 Hz, the Vsync signal period may be 16.6 ms. In other words, the terminal device generates a control signal every 16.6 ms to periodically trigger the Vsync signal.

It should be noted that the Vsync signals may be classified into software Vsync signals and hardware Vsync signals. The software Vsync signals include Vsync-APP and Vsync-SF. The Vsync-APP is used to trigger a drawing and rendering procedure of an application for an image frame. The Vsync-SF is used to trigger a layer composition procedure of the surface flinger for the image frame. The hardware Vsync signal is used to trigger a screen display refreshing procedure.

Generally, the software Vsync signal and the hardware Vsync signal are kept synchronous in period. A change of 60 Hz and 120 Hz is used as an example. If the hardware Vsync signal is switched from 60 Hz to 120 Hz, the Vsync-APP and the Vsync-SF synchronously change and are switched from 60 Hz to 120 Hz.

For example, when the surface flinger receives the buffer, the surface flinger may request a Vsync signal. When the surface flinger determines that there is still another buffer that needs to be consumed, the surface flinger may request the Vsync signal.

For example, the surface flinger may start a process of performing layer composition on the buffer when receiving any Vsync signal. When receiving any Vsync signal, the surface flinger may determine whether a buffer is received. If a buffer is received, the surface flinger performs layer composition on the buffer. If no buffer is received, the Vsync signal does not participate in image frame composition this time. In a possible implementation, the surface flinger may alternatively release the buffer after processing the buffer, so that the buffer is released from the surface flinger and the BBQ to the bufferqueue.

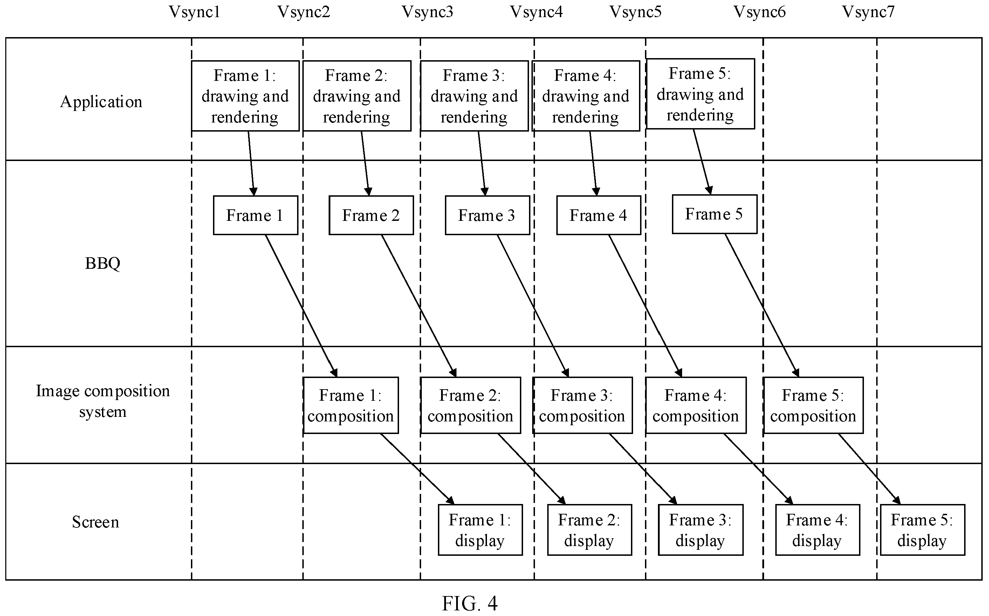

An embodiment of this application provides a schematic diagram of normal consumption of a buffer by a terminal device. FIG. 4 is a schematic diagram of a consumption buffer according to an embodiment of this application.

As shown in FIG. 4, based on a time sequence, content displayed by the terminal device may be successively: a frame 1, a frame 2, a frame 3, a frame 4, and a frame 5.

The display of the frame 1 is used as an example. The camera sensor of the terminal device collects the frame 1, and sends the frame 1 to the application along the camera sensor, the camera HAL, and the camera service based on the description in the embodiment corresponding to FIG. 2. The camera application performs drawing and rendering on the frame 1. After the drawing and rendering of the frame 1 are completed, an application of the terminal device sends the frame 1 obtained after drawing and rendering to a surface flinger by using the BBQ. The surface flinger composites the frame 1 obtained after drawing and rendering. After composition of the frame 1 is completed, the terminal device may invoke the kernel layer to start the display driver, and display content corresponding to the frame 1 on a screen. Similarly, for a process of compositing and displaying the frame 2, the frame 3, the frame 4, and the frame 5, refer to the frame 1. Details are not described herein again. Each frame lags 2 Vsync signal periods from drawing to display in FIG. 3.

It may be understood that, in a case in which the frame 1, the frame 2, the frame 3, the frame 4, and the frame 5 are uniformly sent by the camera sensor to the application, and are uniformly transmitted by the application to the surface flinger, the terminal device may smoothly display the frame 1, the frame 2, the frame 3, the frame 4, and the frame 5 on the screen.

However, due to a difference between original image frames, a time consumed by the camera HAL for performing image processing on each original image frame varies. Consequently, times at which the camera HAL returns frames to the camera service are not uniform, and freezing may occur when the terminal device displays image frames with non-uniform frame return times. The frame return time may be understood as a time at which an image frame is sent from the camera HAL after the camera HAL performs image processing on the image frame.

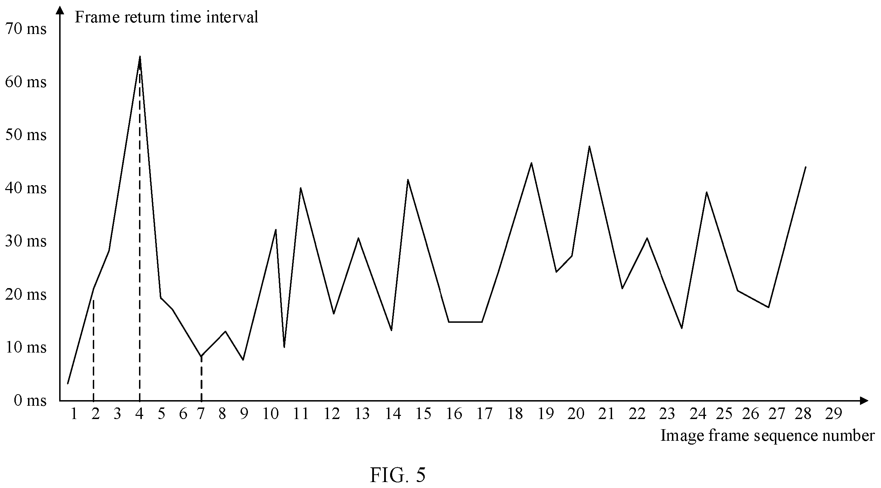

For example, FIG. 5 is a schematic diagram of a frame return time interval according to an embodiment of this application. For coordinate axes shown in FIG. 5, a horizontal axis may be understood as a sequence number of each image frame, and a vertical axis may be understood as a frame return time interval between a frame return time of a current image frame and a frame return time of a previous image frame. It can be seen that a frame return time interval between an image frame whose sequence number is 2 and an image frame whose sequence number is 1 may be approximately 18 milliseconds (ms). A frame return time interval between an image frame whose sequence number is 4 and an image frame whose sequence number is 3 may be approximately 63 ms. A frame return time interval between an image frame whose sequence number is 7 and an image frame whose sequence number is 6 may be approximately 10 ms.

It may be understood that a time consumed by the camera HAL for performing image processing on each original image frame varies, and consequently, frame return time intervals of adjacent image frames in an image sequence sent by the camera HAL are not uniform. As shown in FIG. 5, a minimum frame return time interval may be approximately 10 ms, and a maximum frame return time interval may be approximately 60 ms.

Generally, the terminal device may provide two specific cases in which the preview picture is frozen because frame return times of the camera HAL are not uniform.

In an implementation, the camera HAL may mark a first expected display timestamp in the buffer. The surface flinger further generates a second expected display timestamp corresponding to the buffer, and the surface flinger may compare the first expected display timestamp corresponding to the buffer with the second expected display timestamp corresponding to the buffer. If the first expected display timestamp is earlier than the second expected display timestamp, the surfaceflinger takes out all buffers, and the bufferqueue eliminates an old buffer, and retains only one latest buffer that meets a requirement for consumption. In this case, when the camera HAL returns a frame relatively fast, some buffers are discarded, and consequently freezing occurs when the terminal device performs displaying in the preview picture.

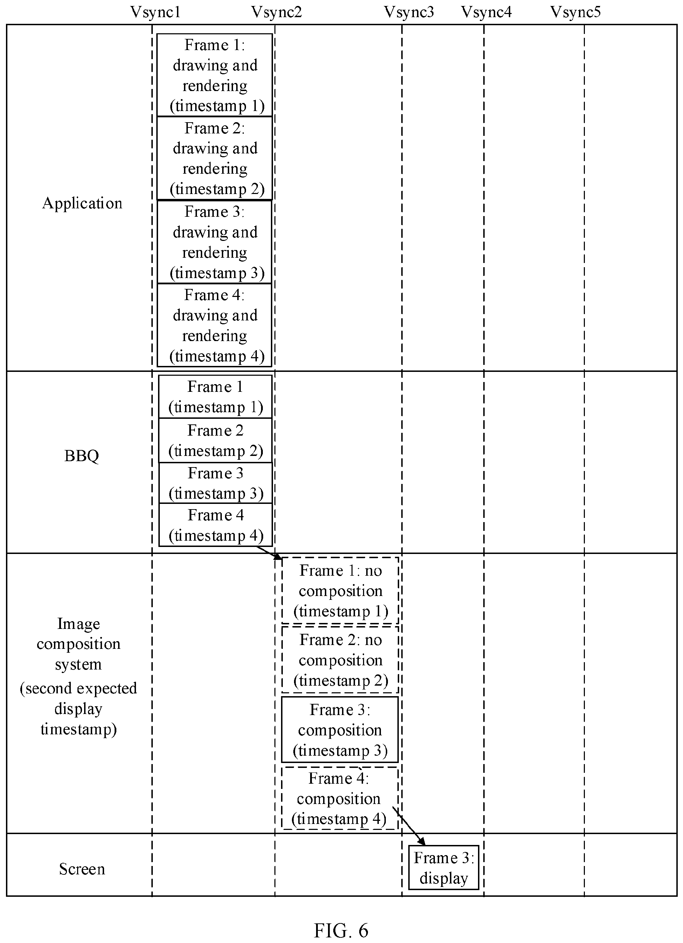

For example, FIG. 6 is a schematic diagram of another consumption buffer according to an embodiment of this application. As shown in FIG. 6, because frame return times of the camera HAL are not uniform, an application may receive a frame 1, a frame 2, a frame 3, and a frame 4 in a period in which Vsync1 is located. A first expected display timestamp marked for the frame 1 is a timestamp 1, a first expected display timestamp marked for the frame 2 is a timestamp 2, a first expected display timestamp marked for the frame 3 is a timestamp 3, and a first expected display timestamp marked for the frame 4 is a timestamp 4.

Further, the application may set the frame 1, the frame 2, the frame 3, and the frame 4 in the BBQ. After receiving the frame 1, the frame 2, the frame 3, and the frame 4, the surface flinger may separately set a second expected display timestamp for the frame 1, the frame 2, the frame 3, and the frame 4. In a case in which the surface flinger determines that each of the timestamp 1 of the frame 1, the timestamp 2 of the frame 2, and the timestamp 3 of the frame 3 is earlier than the second expected display timestamp, and the timestamp 4 of the frame 4 is later than the second expected display timestamp, the surface flinger may retain the latest buffer, for example, consume the frame 3, and display the frame 3 in a period in which Vsync3 is located. In this scenario, the frame 1 and the frame 2 that are discarded, and the frame 3 cause freezing to display of the preview picture.

In another implementation, in a process in which the surface flinger performs layer composition on the buffer, one buffer is consumed each time, and a remaining buffer is stored in the bufferqueue. During processing of any buffer, the surface flinger knows only a timestamp of returning a frame by the camera HAL, but cannot know a time at which the camera sensor actually outputs a frame. As a result, even if the camera sensor outputs the frame at a specific frame rate, actually, a time at which the surface flinger outputs an image after performing layer composition on the buffer is postponed accordingly based on the timestamp of returning a frame by the camera HAL. Consequently, the preview picture may be frozen because timestamps of returning frames by the camera HAL are not uniform.

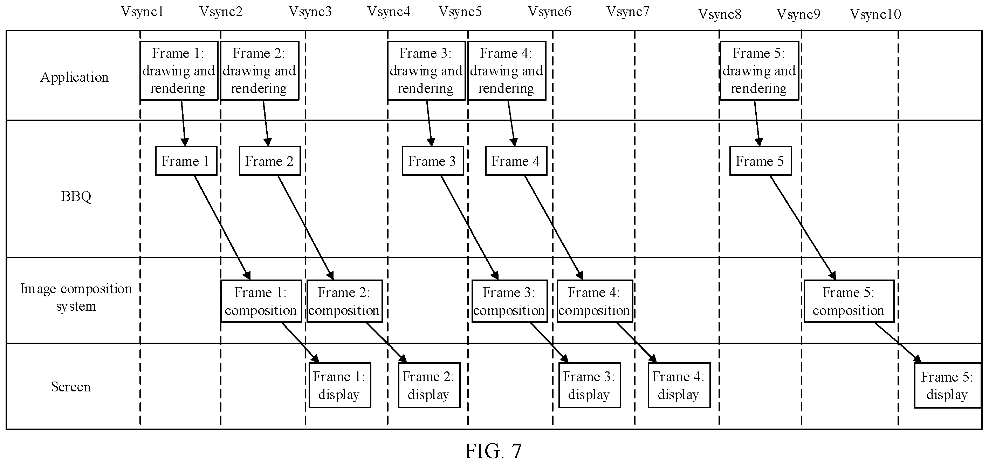

For example, FIG. 7 is a schematic diagram of another consumption buffer according to an embodiment of this application. As shown in FIG. 7, in a case in which frame return times of the camera HAL are not uniform, a time interval between two frames when image drawing and rendering are performed at an application may also be not uniform. For example, the application may perform drawing and rendering on the frame 1 in a Vsync1 period, perform drawing and rendering on the frame 2 in a Vsync2 period, perform drawing and rendering on the frame 3 in a Vsync4 period, perform drawing and rendering on the frame 4 in a Vsync5 period, and perform drawing and rendering on the frame 5 in a Vsync8 period.

Further, the application may send the frames obtained after drawing and rendering to the surface flinger by using the BBQ. In this case, when the surface flinger composites the frames, a composition time interval between adjacent frames is also not uniform, resulting in non-uniform display of adjacent frames on the screen. For example, the screen displays the frame 1 in a Vsync3 period, displays the frame 2 in a Vsync4 period, and displays the frame 3 in a Vsync6 period, bringing a sense of freezing to the user.

In view of this, an embodiment of this application provides an image frame stabilization method, so that a terminal device can ensure fluency of a preview picture when performing layer composition on an image frame.

It may be understood that the terminal device may also be referred to as a terminal (terminal), user equipment (user equipment, UE), a mobile station (mobile station, MS), a mobile terminal (mobile terminal, MT), or the like. The terminal device may be a mobile phone (mobile phone) with a touchscreen, a smart TV, a wearable device, a tablet computer (Pad), a computer with a wireless sending/receiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in the embodiments of this application.

Therefore, to better understand the embodiments of this application, the following describes a structure of the terminal device in the embodiments of this application. For example,

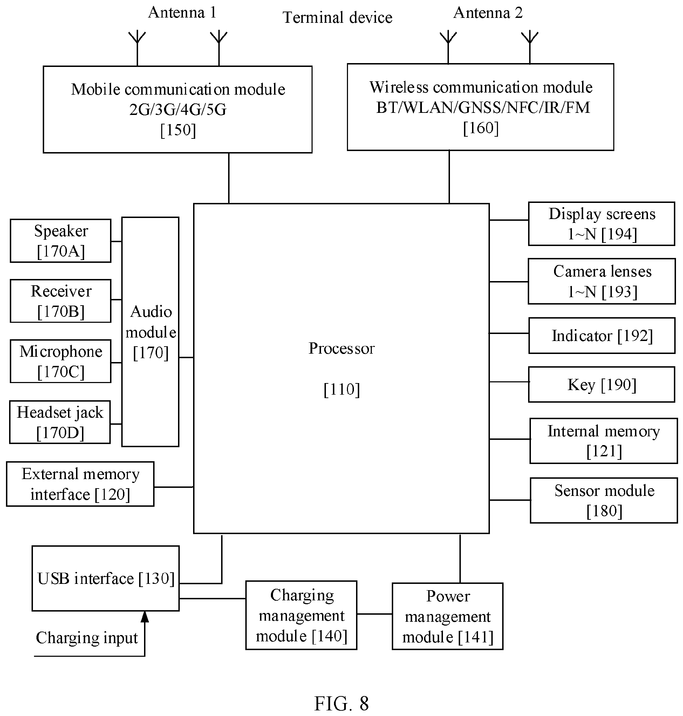

FIG. 8 is a schematic diagram of a hardware structure of a terminal device according to an embodiment of this application.

The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a key 190, an indicator 192, a camera lens 193, a display screen 194, and the like. The sensor module 180 may include one or more of the following: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, or the like.

It may be understood that the structure shown in the embodiments of this application does not constitute a specific limitation on the terminal device. In some other embodiments of this application, the terminal device may include more or fewer components than those shown in the figure, or combine some components, or split some components, or have different component arrangements. The components shown in the figure may be implemented by using hardware, software, or a combination of software and hardware.

The processor 110 may include one or more processing units. Different processing units may be independent components, or may be integrated into one or more processors. A memory may be further disposed in the processor 110 to store instructions and data.

The USB interface 130 is an interface that complies with USB standard specifications, and may be specifically a Mini USB interface, a Micro USB interface, a USB Type C interface, or the like. The USB interface 130 may be configured to be connected to a charger to charge the terminal device, may be configured to transmit data between the terminal device and a peripheral device, or may be configured to be connected to a headset to play audio through the headset. The interface may alternatively be configured to be connected to another electronic device, for example, an AR device.

The charging management module 140 is configured to receive a charging input from a charger. The charger may be a wireless charger or a wired charger. The power management module 141 is configured to be connected to the charging management module 140 and the processor 110.

A wireless communication function of the terminal device may be implemented by using the antenna 1, the antenna 2, the mobile communication module 150, the wireless communication module 160, a modem processor, a baseband processor, and the like.

The antenna 1 and the antenna 2 are configured to transmit and receive electromagnetic wave signals. The antenna in the terminal device may be configured to cover one or more communication bands. Different antennas may be further multiplexed to improve antenna utilization.

The mobile communication module 150 may provide a solution for wireless communication that is applied to the terminal device and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation.

The wireless communication module 160 may provide a solution for wireless communication that is applied to the terminal device and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), and the like.

The terminal device implements a display function by using the GPU, the display screen 194, the application processor, and the like. The GPU is a microprocessor for image processing and is connected to the display screen 194 and the application processor. The GPU is configured to perform mathematical and geometric calculation for graphics rendering.

The display screen 194 is configured to display an image, a video, and the like. The display screen 194 includes a display panel. In some embodiments, the terminal device may include 1 or N display screens 194, where N is a positive integer greater than 1.

The terminal device may implement a shooting function by using the ISP, the camera lens 193, the video codec, the GPU, the display screen 194, the application processor, and the like.

The camera lens 193 is configured to capture a still image or a video. In some embodiments, the terminal device may include 1 or N camera lenses 193, where N is a positive integer greater than 1.

The external memory interface 120 may be configured to be connected to an external storage card such as a Micro SD card, to expand a storage capability of the terminal device. The external storage card communicates with the processor 110 by using the external memory interface 120, to implement a data storage function, for example, to store files such as music and videos in the external storage card.

The internal memory 121 may be configured to store computer-executable program code, and the executable program code includes instructions. The internal memory 121 may include a program storage area and a data storage area.

The terminal device may implement an audio function by using the audio module 170, the speaker 170A, the receiver 170B, the microphone 170C, the headset jack 170D, the application processor, and the like. For example, music playing and sound recording are implemented.

The audio module 170 is configured to convert digital audio information into an analog audio signal for output, and is further configured to convert an analog audio input into a digital audio signal. The speaker 170A, also referred to as a "horn", is configured to convert an audio electrical signal into a sound signal. The terminal device may be used to listen to music or answer a call in a hands-free mode through the speaker 170A. The receiver 170B, also referred to as an "earpiece", is configured to convert an audio electrical signal into a sound signal. When the terminal device receives a call or a voice message, the receiver 170B may be placed close to a human ear to receive the voice. The headset jack 170D is configured to connect to a wired headset. The microphone 170C, also referred to as a "mic" or "mike", is configured to convert a sound signal into an electrical signal. In the embodiments of this application, the terminal device may have one microphone 170C.

The key 190 includes a power-on/off key, a volume key, and the like. The key 190 may be a mechanical key, or may be a touch key. The terminal device may receive a key input and generate a key signal input related to user settings and function control of the terminal device. The indicator 192 may be an indicator light, may be configured to indicate a charging status or a power change, and may be further configured to indicate a message, a missed incoming call, a notification, and the like.

A software system of the terminal device may use a layered architecture, an event-driven architecture, a microkernel architecture, a microservice architecture, a cloud architecture, or the like. Details are not described herein.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments again.

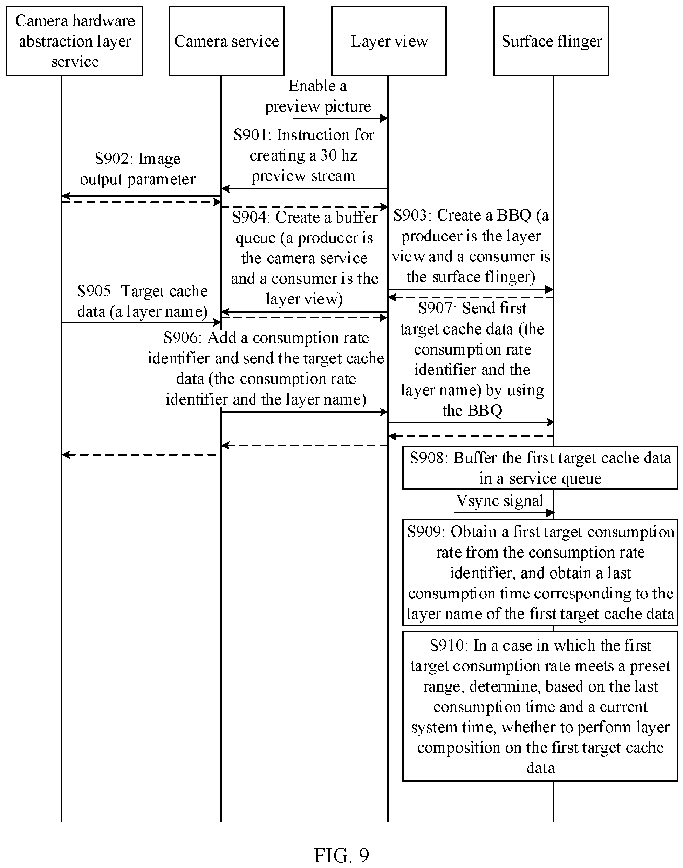

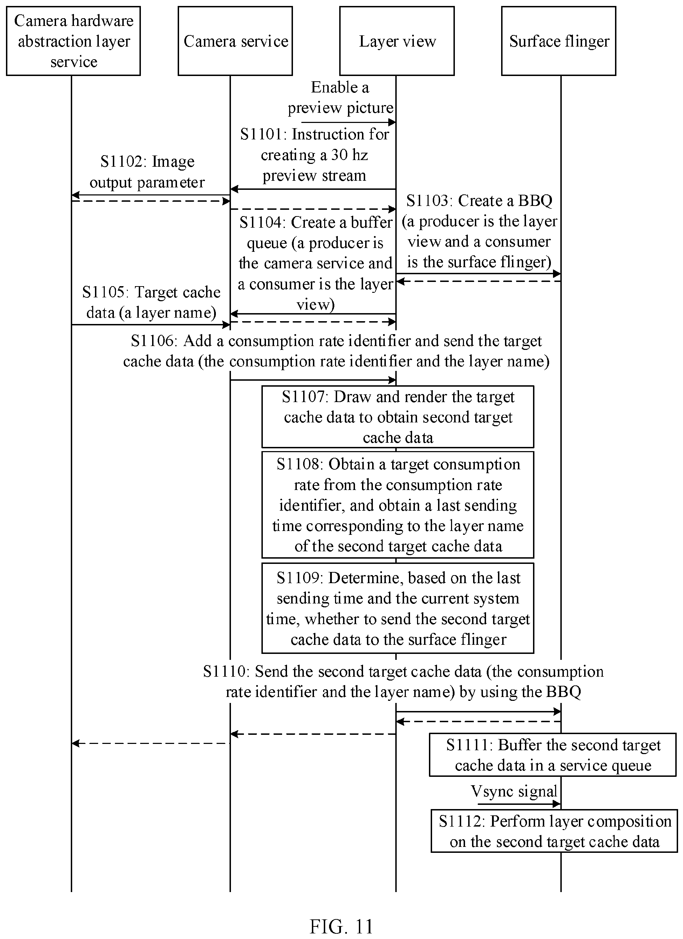

To resolve the case of freezing caused during display of the terminal device due to non-uniform frame return times of the camera HAL, an embodiment of this application provides an image frame stabilization method. An image frame stabilization process may be performed before a surface flinger composites an image frame (refer to the embodiment corresponding to FIG. 9). Alternatively, the image frame stabilization process may be performed after an application draws and renders an image frame (refer to the embodiment corresponding to FIG. 11).

For example, FIG. 9 shows an image frame stabilization method according to an embodiment of this application. In the embodiment corresponding to FIG. 9, the terminal device may include a surface view, a camera HAL, a camera service, a surface flinger, and the like.

As shown in FIG. 9, the image frame stabilization method may include the following steps.

S901: The surface view sends, to the camera service, an instruction for creating a 30 Hz preview stream.

The 30 Hz in the instruction for creating a 30 Hz preview stream may be used as an example, and should not constitute a limitation on this embodiment of this application. The 30 Hz may also be referred to as a first frame rate. It may be understood that when a frame rate is low, freezing occurring on the terminal device is obvious. Therefore, the first frame rate may generally be less than 60 Hz.

For example, when the surface view receives an operation of enabling a preview picture by a user, the surface view may send, to the camera service, an instruction for creating a 30 Hz preview stream. In a possible implementation, the camera service may alternatively return a response message to the surface view. The operation of enabling the preview picture may be an operation of enabling a camera application, an operation of switching from another function of the camera application to the preview picture, or the like. This is not limited in this embodiment of this application.

S902: The camera service sends an image output parameter to the camera HAL.

The image output parameter may include one or more of the following: an image output mode, an image size for image output, the first frame rate (such as 30 Hz), or other data.

Adaptively, when the camera HAL receives the image output parameter, the camera HAL may continue to send the image output parameter to the camera sensor, so that the camera sensor may output an image based on the image output parameter to generate an original image sequence. The camera sensor sends the original image sequence to the camera HAL for image processing. Further, the camera HAL may perform a step shown in S905 after performing image processing on each image in the original image sequence.

In a possible implementation, when receiving the image output parameter, the camera HAL may alternatively return a response message to the camera service.

S903: The surface view creates a BBQ (a producer is the surface view and a consumer is the surface flinger).

The BBQ may alternatively serve as a consumer of the bufferqueue.

S904: The surface view creates a bufferqueue (a producer is the camera service and a consumer is the surface view).

For specific steps of creating the BBQ and the bufferqueue by the surface view, refer to descriptions in the embodiment corresponding to FIG. 2. Details are not described herein again.

S905: The camera HAL sends target cache data (a layer name) to the camera service.

The target cache data (which is alternatively referred to as a target buffer) may be data obtained after the camera HAL performs image processing, and any piece of cache data may correspond to one layer name. The target cache data may be understood as any buffer generated when the camera HAL outputs an image based on the 30 Hz image output frame rate. When the target cache data is data used to support the preview picture, the layer name may be a layer view (which is alternatively referred to as a preview layer) of a camera, such as SurfaceView[camera].

For example, the camera HAL may receive the original image sequence returned by the camera sensor, and separately perform image processing on each image frame in the original image sequence. For example, the camera HAL may perform image processing on original cache data in the original image sequence to obtain target cache data, and then send the target cache data and a layer name corresponding to the target cache data to the camera service together.

It may be understood that, due to a difference between image frames in the original image sequence, a time consumed by the camera HAL for performing image processing on each image frame varies. Consequently, times at which the camera HAL returns frames to the camera service are not uniform, resulting in freezing of the preview picture. The image processing procedure may include one or more of the following: image cropping, image special effect processing, anti-shake processing, image recognition, or the like. This is not limited in this embodiment of this application.

S906: The camera service adds a consumption rate identifier to the target cache data, and sends the target cache data (the consumption rate identifier and the layer name) to the surface view.

The consumption rate identifier may indicate a target consumption rate, and a value of the target consumption rate may be the same as a value of the first frame rate, for example, may be 30 Hz. The consumption rate identifier enables the surface flinger to determine a composition situation of the target cache data based on the target consumption rate, so as to reduce picture freezing caused by non-uniform frame output times of the camera HAL.

For example, the camera service may create a BufferItem object, associate target cache data of the camera HAL, set a consumption rate identifier for the target cache data in the BufferItem object, and then invoke a bufferqueue interface to send the BufferItem object to the surface view. It may be understood that the camera service may set a consumption rate identifier for any received buffer.

S907: The surface view sends the target cache data (the consumption rate identifier and the layer name) to the surface flinger by using the BBQ.

In a possible implementation, when receiving the target cache data (the consumption rate identifier and the layer name), the surface view may determine whether the consumption rate identifier of the target cache data and the layer name of the target cache data are changed compared with the consumption rate identifier of the previous buffer and the layer name of the previous buffer. For example, when determining that the consumption rate identifier of the target cache data is changed, the surface view sends the target cache data with the consumption rate identifier to the surface flinger. Alternatively, when determining that the layer name of the target cache data is changed, the surface view sends the target cache data with the layer name to the surface flinger. Alternatively, when determining that neither the consumption rate identifier nor the layer name is changed, the surface view may send the target cache data to the surface flinger.

It may be understood that even if the surface flinger receives the target cache data but does not receive the consumption rate identifier and the layer name, the surface flinger may still determine, based on the previously buffered layer name and consumption rate identifier of the buffer, that the consumption rate identifier and the layer name of the target cache data are not changed.

In a process in which the surface view sends the target cache data to the surface flinger by using the BBQ, the surface view may receive the target cache data in the BufferItem object. The surface view invokes an acquireBuffer function to consume the target cache data, and invokes a queueBuffer function to send the BufferItem object to the BBQ. After receiving the target cache data, the BBQ invokes a setTransaction interface to continue to transfer the target cache data to the surface flinger by using the transaction object.

It may be understood that the transaction object is a medium object that communicates with the surface flinger. In addition to including the target cache data, the transaction object may further include data corresponding to a surface, such as a layer name, a length and a width of an interface that the surface needs to update, transparency, and scaling and translation parameters. Because many parameters need to be sent to the surface flinger in one frame, the surface view sets all the foregoing parameters related to the surface in the transaction object, and sends them to the surface flinger together to reduce a process communication time. Similarly, in addition to setting the target cache data in the transaction object, the bufferqueue may further place the consumption rate identifier corresponding to the buffer, buffer id update data, format (format) change data, buffer size change data, and the like in the transaction object, and then send them to the surface flinger together.

In this embodiment of this application, an added interface 1 may be a SetComsumeRate1 interface, and the SetConsumeRate1 is used to indicate the camera application to transfer the consumption rate identifier of the current layer to the Surface view.

An added interface 2 may be a SetConsumeRate2, and the SetComsumeRate2 is used to indicate the surface view to transfer the consumption rate identifier and the layer name of the current layer to the surface flinger.

An added interface 3 may be a SetComsumeRate3, and the SetConsumeRate3 is used to indicate the camera service to transfer the consumption rate identifier of the current layer to the bufferqueue.

An added interface 4 may be a SetComsumeRate4, and the SetConsumeRate4 is used to indicate the surface view to transfer a consumption rate identifier of the BBQ to the BBQ.

When a consumption rate identifier needs to be set for an application, the consumption rate identifier may be set in the buffer, or may be set in the surface. The buffer and the surface are associated with each other. Before the transaction object sends the parameter to the surface flinger, the transaction object is associated with the layer_state_t structure object, which includes all information about a change of a layer. For example, the information may be data such as whether the layer is visible, an offset of the layer, whether the layer is a secure layer, a surfaceid (which is alternatively referred to as a layer name), a bufferid (which may be, for example, a name of the target cache data), a length and a width of an interface, transparency, and scaling and translation parameters. After receiving the layer_state_t, the surface flinger can obtain, through parsing, a corresponding layer and a layer name in the current process.

In a process of creating the transaction object, the parameter sc may be a pointer of the layer, and the parameter rate is a target consumption rate. After a setConsumeRate method is invoked to set the consumption rate identifier, the camera application may invoke an apply method to send the parameter to the surface flinger. The parameter sc may be transmitted in the BBQ. The BBQ stores a layer corresponding to the current bufferqueue.

The surface view may implement a drawing and rendering function for the target cache data, and after drawing and rendering the target cache data, send first target cache data obtained after drawing and rendering to the surface flinger by using the BBQ.

S908: The surface flinger buffers the first target cache data in a service (transaction) queue.

S909: The surface flinger obtains a target consumption rate from the consumption rate identifier, and obtains a last consumption time corresponding to the layer name of the first target cache data.

The surface flinger may store a first mapping relationship between a layer and a last consumption time corresponding to the layer. The last consumption time described in the step shown in S909 may be understood as a moment at which a previous piece of cache data of the layer starts to be composited. The surface flinger may store the foregoing first mapping relationship in a form of a hash table or the like.

For example, when the surface flinger receives a Vsync signal, the surface flinger may traverse the transaction queue. If the consumption rate identifier is set for the first target cache data in the transaction queue, the surface flinger may obtain the layer name corresponding to the first target cache data, and further obtain, based on the first mapping relationship, the last consumption time corresponding to the layer name of the first target cache data.

For example, when the layer name of the first target cache data received by the surface flinger is SurfaceView[camera], the surface flinger may search for a consumption time at which the surface flinger consumes the previous cache data of the SurfaceView[camera].

In a possible implementation, a correspondence between a layer and a consumption rate corresponding to the layer may also be set for the surface flinger, so that the surface flinger can determine the target consumption rate based on the layer name corresponding to the first target cache data when receiving the first target cache data and the layer name of the first target cache data. In this case, even if the surface flinger does not receive the consumption rate identifier, the surface flinger may still determine a composition situation of the first target cache data based on a preset consumption rate related to the layer.

S910: In a case of determining that the target consumption rate meets a preset range, the surface flinger determines, based on the last consumption time and a current system time, whether to perform layer composition on the first target cache data.

The preset range may be a range in which the consumption rate meets 1 Hz-120 Hz or the like. For example, the preset range may alternatively be a value such as 1 Hz-60 Hz. This is not limited in this embodiment of this application. A value of any consumption rate in the preset range may be less than a system refresh rate.

For example, in a case in which the surface flinger determines that the target consumption rate meets the preset range, the surface flinger may calculate a first difference between the current system time and the last consumption time corresponding to the layer of the target cache data. For example, the first difference may be a value obtained by subtracting the last consumption time corresponding to the layer of the target cache data from the current system time. The first difference may be understood as an actual time interval between a time at which layer composition is performed on the first target cache data and a time at which layer composition is performed on the previous buffer of the first target cache data.

Further, when the surface flinger determines that the first difference is less than 1 second/target consumption rate*m, the surface flinger may not perform layer composition on the first target cache data. In a possible implementation, in a case in which the surface flinger determines that layer composition may not be performed on the first target cache data, the surface flinger may continue to determine, when the next Vsync signal arrives, whether to perform layer composition on the first target cache data.

The 1 second/target consumption rate may be understood as a time required for implementing normal layer composition on the first target cache data, or may be understood as a theoretical time interval between the time at which layer composition is theoretically performed on the first target cache data and the time at which layer composition is theoretically performed on the previous buffer of the first target cache data. A value of m may be a value such as 0.75 or 0.8, or a value of m may meet a range of 0.5-1, and m may be used to cancel out picture freezing caused by non-uniform frame output times of the camera HAL. A value of m is not limited in this embodiment of this application.

It may be understood that the first difference being less than 1 second/target consumption rate*m may be understood as follows: The actual time interval between two buffers, namely, the first target cache data and the previous buffer of the first target cache data, is less than the theoretical time interval between these two buffers. In other words, to ensure the target consumption rate, the surface flinger cannot complete layer composition on the first target cache data within the actual time interval.

Alternatively, when the surface flinger determines that the first difference is greater than or equal to 1 second/target consumption rate*m, the surface flinger may perform layer composition on the first target cache data, and set the last consumption time of the layer to the current system time.

It may be understood that the first difference being greater than or equal to 1 second/target consumption rate*m may be understood as follows: The actual time interval between these two buffers is greater than or equal to the theoretical time interval between these two buffers. In other words, the surface flinger can complete layer composition on the first target cache data within a sufficient time interval.

In a possible implementation, when the surface flinger determines that the target consumption rate does not meet the preset range, for example, the target consumption rate is a value such as 0 Hz, -1 Hz, or greater than 120 Hz, the surface flinger may determine that no special processing needs to be performed on the target consumption rate, and may perform layer composition on the first target cache data, and set the last consumption time corresponding to the layer name to 0.

In a possible implementation, if the surface flinger has a buffer that is not consumed, for example, the transaction queue includes data other than the first target cache data, the surface flinger may request a next Vsync signal, and in a case in which the next Vsync signal arrives, continue to process the unconsumed buffer based on the steps shown in S909-S910.

After S910, the surface flinger may send the layer-composited buffer to the HWC, and after the HWC performs processing such as superposition on the layer-composited buffer, continue to forward the processed layer-composited buffer to the display driver for display, so that the terminal device displays the preview picture shown in FIG. 1A.

On this basis, even if frame output times of the camera HAL are not uniform, the surface flinger may still ensure a sufficient layer composition time when layer composition is performed on a buffer, and perform layer composition at a stable consumption rate, so as to reduce picture freezing.

In a possible implementation, the process of displaying the preview picture further includes displaying a control layer. For example, the camera HAL may obtain a plurality of control image frames based on a frame rate corresponding to the control layer, and send the plurality of control image frames to the surface flinger along the camera HAL, the camera service, and the surface view. The frame rate (for example, 60 Hz) corresponding to the control layer is generally greater than the frame rate (for example, the target consumption rate of 30 Hz) corresponding to the preview layer. Therefore, the surface flinger may obtain the control layer in a period in which any preview layer is composited, and obtain the preview picture through composition and display of the preview layer and the control layer.

It may be understood that when the camera HAL returns the image sequence in the step shown in S905, the terminal device may perform the steps shown in S906-S910 on each image frame in the image sequence, that is, perform a frame stabilization operation in the surface flinger, so that the terminal device can uniformly display consecutive image frames. For example, when the image sequence returned by the camera HAL includes a frame 1, a frame 2, and a frame 3, a time interval between the frame 1 and the frame 2 is a first interval, a time interval between the frame 2 and the frame 3 is a second interval, and the first interval is different from the second interval. Adaptively, the surface flinger may obtain a stable picture after processing the frame 1, the frame 2, and the frame 3.

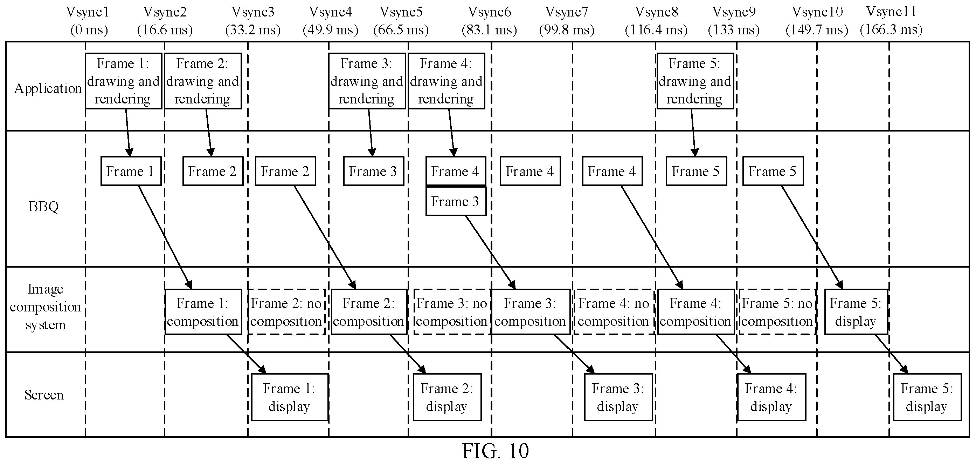

For example, FIG. 10 is a schematic diagram of still another consumption buffer according to an embodiment of this application. In the embodiment corresponding to FIG. 10, an example in which a screen refresh rate is 60 Hz and a target consumption rate determined by the surface flinger is 30 Hz is used for description. When the target consumption rate is 30 Hz and m is 0.8, the surface flinger may determine that a theoretical time interval between two adjacent buffers may be 1/30 Hz*0.8, that is, approximately 27 ms.

As shown in FIG. 10, frame output times of the camera HAL are not uniform. Therefore, an application draws and renders the frame 1 in a Vsync1 period, draws and renders the frame 2 in a Vsync2 period, draws and renders the frame 3 in a Vsync4 period, draws and renders a frame 4 in a Vsync5 period, and draws and renders a frame 5 in a Vsync8 period.

For the frame 1, the application may draw and render the frame 1 in the Vsync1 period (for example, approximately 0 ms), and buffer the frame 1 in a BBQ after drawing and rendering are completed. The surface flinger obtains the frame 1. Because the frame 1 is the first frame, the surface flinger may composite the frame 1 in the Vsync1 period (for example, approximately 16.6 ms). The screen displays the frame 1 in the Vsync3 period (for example, approximately 33.2 ms).

For the frame 2, the application may draw and render the frame 2 in the Vsync2 period (for example, approximately 16.6 ms), and buffer the frame 2 in the BBQ after drawing and rendering are completed. The surface flinger obtains the frame 2. Because an actual time interval between a current system time (for example, a specific moment in the Vsync3 period) in which the frame 2 is located and a consumption time of the frame 1 is less than a theoretical time interval, the surface flinger may temporarily not composite the frame 2. Further, when receiving the Vsync4, the surface flinger may determine that an actual time interval between the current system time (for example, a specific moment in the Vsync4 period) in which the frame 2 is located and the consumption time of the frame 1 is greater than the theoretical time interval. Therefore, the surface flinger may composite the frame 2 in the Vsync4 period. For descriptions of the theoretical time interval and the actual time interval, refer to the step shown in S910.

Similarly, for a manner in which the surface flinger determines whether to composite any frame when the Vsync signal arrives, refer to the frame 1 and the frame 2. Details are not described herein again. It can be seen from FIG. 10 that the surface flinger may composite buffers relatively uniformly based on the target consumption rate and the determining of the time interval during which two adjacent buffers are composited, thereby alleviating picture freezing.

For example, FIG. 11 shows another image frame stabilization method according to an embodiment of this application. As shown in FIG. 11, the image frame stabilization method may include the following steps.

S1101: A surface view sends, to a camera service, an instruction for creating a 30 Hz preview stream.

S1102: The camera service sends an image output parameter to a camera HAL.

S1103: The surface view creates a BBQ (a producer is the surface view and a consumer is a surface flinger).

S1104: The surface view creates a bufferqueue (a producer is the camera service and a consumer is the surface view).

S1105: The camera HAL sends target cache data (a layer name) to the camera service.

S1106: The camera service adds a consumption rate identifier to the target cache data, and sends the target cache data (the consumption rate identifier and the layer name) to the surface view.

For descriptions of the steps shown in S1101-S1106, refer to the steps shown in S901-S906. Details are not described herein again.

S1107: The surface view draws and renders the target cache data to obtain second target cache data.

S1108: The surface view obtains a target consumption rate from the consumption rate identifier, and obtains a last sending time corresponding to the layer name of the second target cache data.

The surface view may store a first mapping relationship between a layer and a last sending time corresponding to the layer. The last sending time may be understood as a moment at which a previous piece of cache data of the layer is sent to the surface flinger. In a possible implementation, the last sending time may alternatively be understood as a time at which the previous piece of cache data of the layer is composited in the surface flinger, or the like.

For example, when the layer name of the second target cache data received by the surface view is SurfaceView[camera], the surface view may search for a sending time at which the surface flinger consumes the previous cache data of the SurfaceView[camera].

S1109: The surface view determines, based on the last sending time and the current system time, whether to send the second target cache data to the surface flinger.

For example, the surface view may calculate a second difference between the current system time and the last sending time corresponding to the layer. For example, the second difference may be a value obtained by subtracting the last sending time corresponding to the layer from the current system time. The second difference may be understood as an actual time interval between the sending time of the second target cache data and a sending time at which a previous buffer of the second target cache data is sent to the surface flinger.

Further, when the surface view determines that the second difference is less than 1 second/target consumption rate*m, the surface view may not send the second target cache data to the surface flinger in the current period. In a possible implementation, in a case in which the surface view determines that the second target cache data may not be sent to the surface flinger in the current period, the surface view may continue to determine, when the next Vsync signal arrives, whether to send the second target cache data to the surface flinger.

Alternatively, when the surface view determines that the second difference is greater than or equal to 1 second/target consumption rate*m, the surface flinger may send the second target cache data to the surface flinger, and set the last sending time of the layer to the current system time.

It may be understood that the surface view may perform frame stabilization processing on the target cache data based on the target consumption rate, for example, determine whether to send the second target cache data to the surface flinger in the vsync signal period. In this way, after the surface view performs frame stabilization processing on each frame in the image sequence, it may be ensured that an image obtained after drawing and rendering may be output to the surface flinger as uniformly as possible, thereby alleviating picture freezing.

S1110: The surface view sends the second target cache data (the consumption rate identifier and the layer name) to the surface flinger by using the BBQ.

S1111: The surface flinger buffers the second target cache data in a transaction queue.

S1112: The surface flinger performs layer composition on the second target cache data.

In a possible implementation, when the camera HAL service returns the image sequence in the step shown in S1105, the terminal device may perform the steps shown in S1106-S1112 on each image frame in the image sequence, that is, perform a frame stabilization operation in the surface view, so that the terminal device can uniformly display consecutive image frames. For example, when the image sequence returned by the camera HAL includes a frame 1, a frame 2, and a frame 3, a time interval between the frame 1 and the frame 2 is a first interval, a time interval between the frame 2 and the frame 3 is a second interval, and the first interval is different from the second interval. Adaptively, the surface view may perform drawing and rendering processing on the frame 1, the frame 2, and the frame 3, and successively send these three frames obtained after drawing and rendering to the surface flinger based on the target consumption rate, so that the terminal device can obtain a stable picture.

On this basis, even if frame output times of the camera HAL are not uniform, the surface view may still stably send the image frame to the surface flinger, so that the surface flinger may perform layer composition based on a stable consumption rate, so as to reduce picture freezing.

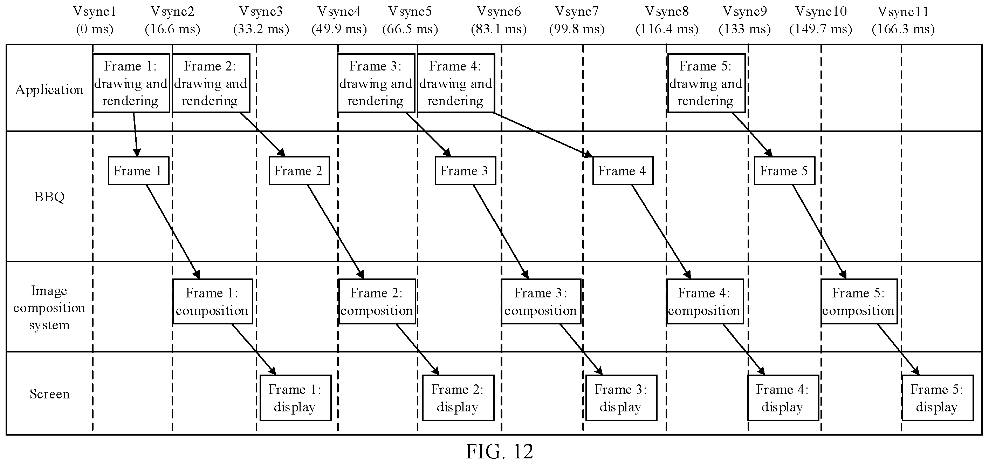

For example, FIG. 12 is a schematic diagram of still another consumption buffer according to an embodiment of this application. In the embodiment corresponding to FIG. 12, an example in which a screen refresh rate is 60 Hz and a target consumption rate determined by the surface flinger based on the layer is 30 Hz is used for description. When the target consumption rate is 30 Hz and m is 0.8, the surface flinger may determine that a theoretical time interval between two adjacent buffers may be 1/30 Hz*0.8, that is, approximately 27 ms. For descriptions of the theoretical time interval and the actual time interval, refer to the step shown in S1109.

As shown in FIG. 12, frame output times of the camera HAL are not uniform, and times at which image frames are input into the application are not uniform. Based on the image frame stabilization method in the embodiment corresponding to FIG. 11, the application may uniformly send the image frames to the surface flinger.

For example, the application may draw and render the frame 1 in a Vsync1 period, draw and render the frame 2 in a Vsync2 period, draw and render the frame 3 in a Vsync4 period, draw and render a frame 4 in a Vsync5 period, and draw and render a frame 5 in a Vsync8 period.

After drawing and rendering, for any frame, for example, for the frame 2, because an actual time interval between a current system time in which the frame 2 is located and a time at which the frame 1 is sent to the BBQ (or the surface flinger) is less than a theoretical time interval, the application may temporarily not send the frame 2 to the BBQ in the Vsync2 period. Further, when receiving the Vsync3, the application may determine that the actual time interval between the current system time in which the frame 2 is located and the time at which the frame 1 is sent to the BBQ (or the surface flinger) is greater than the theoretical time interval. Therefore, the application may send the frame 2 to the BBQ in the Vsync3 period.

Similarly, for a manner in which the application determines whether to send the frame 3, the frame 4, and the frame 5 when the Vsync signal arrives, refer to the description of the frame 2. Details are not described herein again.

It can be seen from FIG. 12 that the application may send the buffers to the BBQ and the surface flinger relatively uniformly based on the target consumption rate and the determining of the time interval during which two adjacent buffers are separately sent to the BBQ (or the surface flinger), thereby alleviating picture freezing caused when the screen displays consecutive frames. For example, the application may stabilize the image frames, so that the frame 1, the frame 2, the frame 3, the frame 4, and the frame 5 are in a uniformly displayed state.

It may be understood that the image frame stabilization method provided in this embodiment of this application not only may be applied to a scenario in which a camera displays a preview picture, as shown in FIG. 9 or FIG. 11, but also may be applied to a scenario in which a received video is frozen due to a network delay. This is not limited in this embodiment of this application.

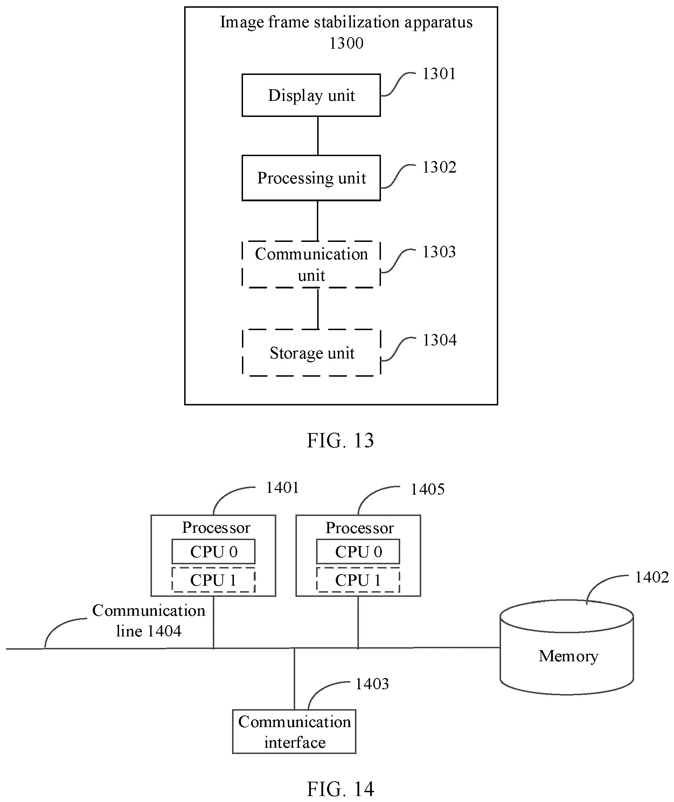

The method provided in the embodiments of this application is described above with reference to FIG. 4-FIG. 12. An apparatus for performing the method provided in the embodiments of this application is described below. FIG. 13 is a schematic diagram of a structure of an image frame stabilization apparatus according to an embodiment of this application. The image frame stabilization apparatus may be the terminal device in the embodiments of this application, or may be a chip or a chip system in the terminal device.

As shown in FIG. 13, an image frame stabilization apparatus 1300 may be used in a communication device, a circuit, a hardware component, or a chip, and the image frame stabilization apparatus includes a display unit 1301 and a processing unit 1302. The display unit 1301 is configured to support the image frame stabilization apparatus 1300 in performing a display step. The processing unit 1302 is configured to support the image frame stabilization apparatus 1300 in performing an information processing step.

In a possible implementation, the image frame stabilization apparatus 1300 may further include a communication unit 1303. Specifically, the communication unit is configured to support the image frame stabilization apparatus 1300 in performing steps of data sending and data receiving. The communication unit 1303 may be an input or output interface, a pin, a circuit, or the like.

In a possible embodiment, the image frame stabilization apparatus may further include a storage unit 1304. The processing unit 1302 and the storage unit 1304 are connected to each other by using a line. The storage unit 1304 may include one or more memories, and the memory may be a component configured to store a program or data in one or more devices or circuits. The storage unit 1304 may exist independently, and is connected to the processing unit 1302 of the image frame stabilization apparatus by using a communication line. Alternatively, the storage unit 1304 may be integrated into the processing unit 1302.

The storage unit 1304 may store computer-executable instructions of the method in the terminal device, so that the processing unit 1302 performs the method in the foregoing embodiments. The storage unit 1304 may be a register, a cache, a RAM, or the like, and the storage unit 1304 may be integrated into the processing unit 1302. The storage unit 1304 may be a read-only memory (read-only memory, ROM) or another type of static storage device that may store static information and instructions. The storage unit 1304 may be independent of the processing unit 1302.

FIG. 14 is a schematic diagram of a hardware structure of another terminal device according to an embodiment of this application. As shown in FIG. 14, the terminal device includes a processor 1401, a communication line 1404, and at least one communication interface (a communication interface 1403 is used as an example for description in FIG. 14).

The processor 1401 may be a general-purpose central processing unit (central processing unit, CPU), a microprocessor, an application-specific integrated circuit (application-specific integrated circuit, ASIC), or one or more integrated circuits for controlling program execution in the solutions in this application.

The communication line 1404 may include a circuit for transmitting information between the foregoing components.

The communication interface 1403 uses any apparatus such as a transceiver to communicate with another device or a communication network, such as an Ethernet or a wireless local area network (wireless local area networks, WLAN).

Possibly, the terminal device may further include a memory 1402.

The memory 1402 may be a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer, but is not limited thereto. The memory may exist independently, and is connected to the processor by using the communication line 1404. The memory may alternatively be integrated into the processor.

The memory 1402 is configured to store computer-executable instructions for performing the solution in this application, and the processor 1401 controls execution. The processor 1401 is configured to execute the computer-executable instructions stored in the memory 1402, to implement the method provided in the embodiments of this application.

Possibly, the computer-executable instructions in this embodiment of this application may also be referred to as application program code. This is not specifically limited in this embodiment of this application.

During a specific implementation, in an embodiment, the processor 1401 may include one or more CPUs, for example, a CPU 0 and a CPU 1 in FIG. 14.

During a specific implementation, in an embodiment, the terminal device may include a plurality of processors, for example, a processor 1401 and a processor 1405 in FIG. 14. Each of these processors may be a single-core (single-CPU) processor or a multi-core (multi-CPU) processor. The processor herein may be one or more devices, circuits, and/or processing cores configured to process data (for example, computer program instructions).

A computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium on which the computer can perform storage, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. The method described in the foregoing embodiments may be completely or partially implemented by using software, hardware, firmware, or any combination thereof. The computer-readable medium may include a computer storage medium and a communication medium, and may further include any medium that enables a computer program to be transmitted from a place to another place. The storage medium may be any target medium accessible by a computer.

In a possible design, the computer-readable medium may include a compact disc read-only memory (compact disc read-only memory, CD-ROM), a RAM, a ROM, an EEPROM, or another optical disc memory; and the computer-readable medium may include a magnetic disk memory or another magnetic disk storage device. In addition, any connection line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc, and the magnetic disk usually reproduces data magnetically, while the optical disc reproduces data optically by using a laser.

A combination of the foregoing should also be included in the scope of the computer-readable medium. The foregoing descriptions are merely specific implementations of the present invention. However, the protection scope of the present invention is not limited thereto. Any change or replacement readily figured out by a person skilled in the art within the technical scope disclosed in the present invention shall fall within the protection scope of the present invention. Therefore, the protection scope of the present invention shall be subject to the protection scope of the claims.

## Claims

1. An image frame stabilization method, wherein the method is applied to a terminal device, and the method comprises:
receiving a first operation of a user;
starting a camera application in response to the first operation, and successively performing drawing and rendering to obtain a first image frame, a second image frame, and a third image frame, wherein a time interval between the second image frame and the first image frame is a first time interval, a time interval between the third image frame and the second image frame is a second time interval, and the first time interval is different from the second time interval;
compositing the first image frame to obtain a first composited image frame, compositing the second image frame to obtain a second composited image frame, and compositing the third image frame to obtain a third composited image frame, respectively based on a first frame rate; and
displaying the first composited image frame in a first period, displaying the second composited image frame in a second period, and displaying the third composited image frame in a third period, wherein a time interval between the first period and the second period is a third time interval, a time interval between the second period and the third period is a fourth time interval, and the third time interval is the same as the fourth time interval.

2. The method according to claim 1, wherein the compositing the first image frame to obtain a first composited image frame, compositing the second image frame to obtain a second composited image frame, and compositing the third image frame to obtain a third composited image frame, respectively based on a first frame rate comprises:
compositing the first image frame in a fourth period to obtain the first composited image frame when it is determined, in the fourth period, that a first moment is greater than or equal to a target time interval determined based on the first frame rate;
compositing the second image frame in a fifth period to obtain the second composited image frame when it is determined, in the fifth period, that a fifth time interval between a second moment and a time at which the first image frame is composited is greater than or equal to the target time interval, wherein the fifth period is later than the fourth period; and
compositing the third image frame in a sixth period to obtain the third composited image frame when it is determined, in the sixth period, that a sixth time interval between a third moment and a time at which the second image frame is composited is greater than or equal to the target time interval, wherein the sixth period is later than the fifth period.

3. The method according to claim 2, wherein the method further comprises:
not compositing the second image frame in the fifth period when it is determined, in the fifth period, that the fifth time interval is less than the target time interval; and
the compositing the second image frame in a fifth period to obtain the second composited image frame when it is determined, in the fifth period, that a fifth time interval between a second moment and a time at which the first image frame is composited is greater than or equal to the target time interval comprises: compositing the second image frame in a seventh period to obtain the second composited image frame when it is determined, in the seventh period, that a seventh time interval between a fourth moment and the time at which the first image frame is composited is greater than or equal to the target time interval, wherein the seventh period is later than the fifth period, and the seventh period is earlier than the sixth period.

4. The method according to any one of claims 1-3, wherein the first image frame, the second image frame, and the third image frame are all image frames of a preview layer.

5. The method according to any one of claims 1-4, wherein the terminal device comprises a camera module and a camera hardware abstraction layer service; and before the successively performing drawing and rendering to obtain a first image frame, a second image frame, and a third image frame, the method further comprises:
generating, by the camera module, a first image sequence based on the first frame rate, and sending the first image sequence to the camera hardware abstraction layer service, wherein the first image sequence comprises a first original image frame, a second original image frame, and a third original image frame, a time interval between the first original image frame and the second original image frame is an eighth time interval, a time interval between the second original image frame and the third original image frame is a ninth time interval, and the eighth time interval is the same as the ninth time interval; and
performing, by the camera hardware abstraction layer service, image processing on the first original image frame to obtain a first process image frame, performing image processing on the second original image frame to obtain a second process image frame, and performing image processing on the third original image frame to obtain a third process image frame.

6. The method according to claim 5, wherein the terminal device comprises a camera service and a layer view, and the method further comprises:
separately setting, by the camera service, a first identifier for the first process image frame, the second process image frame, and the third process image frame when the camera service receives the first process image frame, the second process image frame, and the third process image frame that are sent by the camera hardware abstraction layer service, wherein the first identifier indicates the first frame rate; and
sending, by the camera service, the first process image frame with the first identifier, the second process image frame with the first identifier, and the third process image frame with the first identifier to the layer view; and
the successively performing drawing and rendering to obtain a first image frame, a second image frame, and a third image frame comprises: successively drawing and rendering, by the layer view, the first process image frame to obtain the first image frame, drawing and rendering the second process image frame to obtain the second image frame, and drawing and rendering the third process image frame to obtain the third image frame.

7. The method according to claim 6, wherein the terminal device comprises a surface flinger; and the compositing the first image frame to obtain a first composited image frame, compositing the second image frame to obtain a second composited image frame, and compositing the third image frame to obtain a third composited image frame, respectively based on a first frame rate comprises:
compositing, by the surface flinger, the first image frame to obtain the first composited image frame, compositing the second image frame to obtain the second composited image frame, and compositing the third image frame to obtain the third composited image frame, respectively based on the first frame rate indicated in the first identifier, in a case in which the surface flinger receives the first identifier sent by the layer view.

8. The method according to claim 6 or 7, wherein the first identifier is obtained based on a SetConsumeRate interface, and the SetConsumeRate interface is configured to indicate the layer view to transfer the first identifier to the surface flinger.

9. The method according to any one of claims 1-7, wherein the first frame rate is less than 60 Hz.

10. An image frame stabilization method, wherein the method is applied to a terminal device, and the terminal device comprises a layer view and a surface flinger; the method comprises:
receiving a first operation of a user;
starting a camera application in response to the first operation, and successively performing, by the layer view, drawing and rendering to obtain a first image frame, a second image frame, and a third image frame, wherein a time interval between the second image frame and the first image frame is a first time interval, a time interval between the third image frame and the second image frame is a second time interval, and the first time interval is different from the second time interval;
sending, by the layer view, the first image frame to the surface flinger in an eighth period based on a first frame rate, sending the second image frame to the surface flinger in a ninth period based on the first frame rate, and sending the third image frame to the surface flinger in a tenth period based on the first frame rate, wherein a time interval between the eighth period and the ninth period is a tenth time interval, a time interval between the ninth period and the tenth period is an eleventh time interval, and the tenth time interval is the same as the eleventh time interval; and
compositing, by the surface flinger, the first image frame to obtain the first composited image frame, compositing the second image frame to obtain the second composited image frame, and compositing the third image frame to obtain the third composited image frame.

11. The method according to claim 10, wherein the sending the first image frame to the surface flinger in an eighth period based on a first frame rate, sending the second image frame to the surface flinger in a ninth period based on the first frame rate, and sending the third image frame to the surface flinger in a tenth period based on the first frame rate comprises:
sending the first image frame to the surface flinger in the eighth period when it is determined, in the eighth period, that a fifth moment is greater than or equal to a target time interval determined based on the first frame rate;
sending the second image frame to the surface flinger in the ninth period when it is determined, in the ninth period, that a twelfth time interval between a sixth moment and a time at which the first image frame is sent to the surface flinger is greater than or equal to the target time interval; and
sending the third image frame to the surface flinger in the tenth period when it is determined, in the tenth period, that a thirteenth time interval between a seventh moment and a time at which the second image frame is sent to the surface flinger is greater than or equal to the target time interval.

12. The method according to claim 11, wherein the method further comprises:
not sending the second image frame to the surface flinger in the ninth period when the twelfth time interval is less than the target time interval in the ninth period; and
the sending the second image frame to the surface flinger in the ninth period when it is determined, in the ninth period, that a twelfth time interval between a sixth moment and a time at which the first image frame is sent to the surface flinger is greater than or equal to the target time interval comprises: sending the second image frame to the surface flinger in an eleventh period when it is determined, in the eleventh period, that a fourteenth time interval between an eighth moment and the time at which the first image frame is sent to the surface flinger is greater than or equal to the target time interval, wherein the eleventh period is later than the ninth period, and the eleventh period is earlier than the tenth period.

13. A terminal device, wherein the terminal device comprises a processor, and the processor is configured to invoke a computer program in a memory to perform the method according to any one of claims 1-9, or perform the method according to any one of claims 10-12.

14. A computer-readable storage medium, wherein the computer-readable storage medium stores computer instructions, and when the computer instructions are run on a terminal device, the terminal device is enabled to perform the method according to any one of claims 1-9, or perform the method according to any one of claims 10-12.

15. A chip, wherein the chip comprises a processor, and the processor is configured to invoke a computer program in a memory to perform the method according to any one of claims 1-9, or perform the method according to any one of claims 10-12.
